Europäisches Patentamt

European Patent Office

Office européen des brevets

(11) Numéro de publication : **0 508 855 A2**

(19)

(12) # DEMANDE DE BREVET EUROPEEN

(21) Numéro de dépôt : **92400848.5**

(22) Date de dépôt : **26.03.92**

(51) Int. Cl.⁵ : **B60K 17/20,** B60K 17/35, F16H 3/66

(30) Priorité : **29.03.91 FR 9103910**

(43) Date de publication de la demande :
**14.10.92 Bulletin 92/42**

(84) Etats contractants désignés :
**DE ES FR GB IT**

(71) Demandeur : **GLAENZER SPICER**
**10 Rue J.P. Timbaud**
**F-78301 Poissy (FR)**

(72) Inventeur : **van Dest, Jean Claude**
**27, chemin du Renard**
**F-91250 Saintry sur Seine (FR)**
Inventeur : **Bourroux, Christian**
**3 rue Maya**
**F-78180 Montigny le Bretonneux (FR)**

(74) Mandataire : **Kohn, Philippe et al**
**c/o CABINET LAVOIX 2, place d'Estienne**
**d'Orves**
**F-75441 Paris Cédex 09 (FR)**

(54) **Système de transmission pour véhicule à quatre roues motrices.**

(57)    Système de transmission pour véhicule automobile routier à quatre roues motrices, caractérisé en ce qu'il comporte un agencement pour l'entraînement en rotation de deux arbres de transmission (18) reliés chacun à une des roues d'un essieu, dans lequel chacun des deux arbres de transmission (18) est relié au groupe motopropulseur (10) du véhicule par l'intermédiaire d'un dispositif (22) permettant un glissement en rotation variable entre son organe d'entrée (12) et son organe de sortie (26), et des moyens de pilotage de chacun des deux dispositifs (22) à glissement variable qui régulent les vitesses de rotation des deux arbres de transmission (18) pour assurer une fonction de répartition du couple entre les deux essieux.

FIG.3

La présente invention concerne un système pour la transmission du couple moteur vers les deux essieux moteurs d'un véhicule automobile routier à quatre roues motrices.

Selon une architecture connue d'un véhicule automobile à quatre roues motrices, chacun des deux essieux comporte un différentiel mécanique et un différentiel supplémentaire peut être interposé sur la transmission longitudinale de manière à obtenir une répartition du couple entre les deux essieux.

Cette architecture est complexe et coûteuse dans la mesure où elle nécessite trois différentiels, le troisième différentiel de répartition du couple pouvant lui-même comporter des moyens pour faire varier le rapport de répartition du couple entre les essieux avant et arrière.

De plus, en cas de perte d'adhérence sur une roue motrice d'un essieu, et du fait de la présence d'un différentiel mécanique sur cet essieu, le pouvoir de traction exercé par cet essieu peut disparaître instantanément et la traction globale du véhicule n'est plus alors exercée que par les roues de l'autre essieu.

Il a déjà été proposé dans le document DE-A-3.820.064 de supprimer les différentiels, et de rendre chaque roue motrice solidaire de la ligne d'entraînement par l'intermédiaire d'un embrayage de manière que la valeur du couple transmis à chaque roue soit commandé indépendamment en fonction de paramètres propres au véhicule tels que par exemple l'angle de braquage ou la vitesse du véhicule.

Cette solution n'est pas satisfaisante dans la mesure où elle ne permet pas d'effectuer une régulation efficace du glissement de traction, ni une répartition du couple qui tienne compte des paramètres extérieurs qui influent directement sur le comportement en rotation des roues, tels que par exemple une modification du coefficient d'adhérence entre la roue et la route.

Afin de remédier à ces inconvénients, l'invention propose un système de transmission pour véhicule automobile routier à quatre roues motrices, caractérisé en ce qu'il comporte un agencement pour l'entraînement en rotation de deux arbres de transmission reliés chacun à une des roues d'un essieu, dans lequel chacun des deux arbres de transmission est relié au groupe motopropulseur du véhicule par l'intermédiaire d'un dispositif permettant un glissement en rotation variable entre son organe d'entrée et son organe de sortie, et des moyens de pilotage de chacun des deux dispositifs à glissement variable qui régulent les vitesses de rotation des deux arbres de transmission pour assurer une fonction de répartition du couple entre les deux essieux.

Selon d'autres caractéristiques de l'invention :

– en l'absence de tout glissement en rotation des dispositifs à glissement variable, les roues de l'essieu qui en est équipé tournent à une vitesse moyenne supérieure à la vitesse moyenne de rotation des roues de l'autre essieu moteur du véhicule ;

– les dispositifs à glissement variable sont pilotés de manière à faire varier globalement la vitesse moyenne de rotation des roues de l'essieu par rapport à la vitesse moyenne de rotation des roues de l'autre essieu moteur du véhicule.

– l'essieu est l'essieu avant directeur du véhicule ;

– l'essieu est l'essieu arrière moteur du véhicule ;

– chacun des deux essieux moteurs du véhicule est équipé d'un agencement pour l'entraînement en rotation de ses deux roues par l'intermédiaire de deux dispositifs à glissement variable, les dispositifs à glissement variable étant pilotés de manière à faire varier globalement la vitesse moyenne de rotation des roues d'un essieu moteur par rapport à la vitesse moyenne de rotation de l'autre essieu moteur ;

– chacun des dispositifs à glissement variable est un système passif ou actif ;

– la plage de variation des vitesses relatives de rotation des deux arbres de transmission d'un essieu est comprise entre 0 et 10 % de la vitesse maximale de rotation des deux arbres de transmission.

D'autres caractéristiques et avantages de l'invention apparaîtront à la lecture de la description détaillée qui va suivre pour la compréhension de laquelle on se reportera aux dessins annexés dans lesquels :

– La figure 1 est un diagramme qui illustre l'angle de braquage d'un véhicule automobile en fonction de la vitesse de rotation des roues ;

– la figure 2 est une courbe qui illustre la variation du produit de l'angle de braquage par la vitesse de rotation moyenne des roues en fonction de cette vitesse ;

– la figure 3 est une représentation schématique qui illustre un mode de réalisation d'un agencement pour l'entraînement en rotation de deux roues d'un essieu moteur d'un véhicule automobile équipé d'un système de transmission selon l'invention ; et

– les figures 4 à 6 illustrent trois exemples de systèmes de transmission selon l'invention.

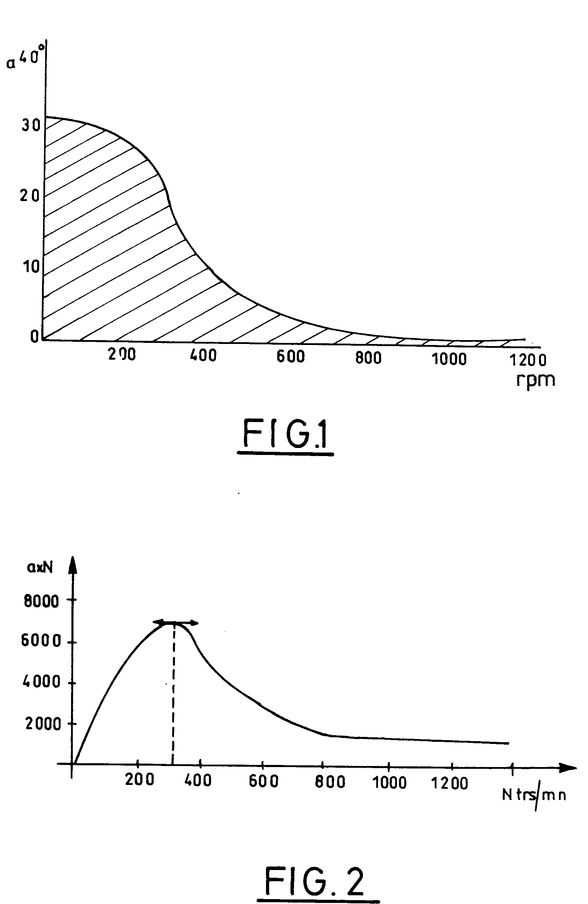

La courbe C illustrée à la figure 1 est le résultat d'une série de mesures effectuées sur un véhicule automobile routier et qui représente l'angle de braquage "a" exprimé en degrés, en fonction de la vitesse de rotation moyenne N exprimée en tours/minute.

La zone hachurée correspond au domaine d'utilisation normal du véhicule.

A partir des données illustrées à la figure 1, il est possible d'établir la courbe de la figure 2 qui représente l'évolution du produit a x N en fonction de la vitesse de rotation moyenne des roues du véhicule.

On constate que le produit de l'angle de braquage "a" par la vitesse moyenne N passe par un maximum qui correspond à une vitesse moyenne de rotation comprise entre 200 et 400 tours/minute.

Pour ce maximum du produit a x N, la différence entre les vitesses de rotation des roues gauche et droite du même essieu est également maximale et est de l'ordre de 60 tours/minute pour un véhicule automobile routier dont l'empatement serait d'environ quatre mètres et la voie d'environ deux mètres.

Par ailleurs, pendant la plus grande partie du temps d'utilisation d'un véhicule routier correspondant à son évolution normale sur route, la valeur des couples transmis aux roues est faible. La combinaison de cette constatation avec la faible variation des vitesses relatives entre les roues gauche et droite, permet de conclure que la puissance requise pour assurer le contrôle de l'évolution du véhicule est en moyenne faible et de l'ordre de 2 à 3 % de la puissance maximale du véhicule.

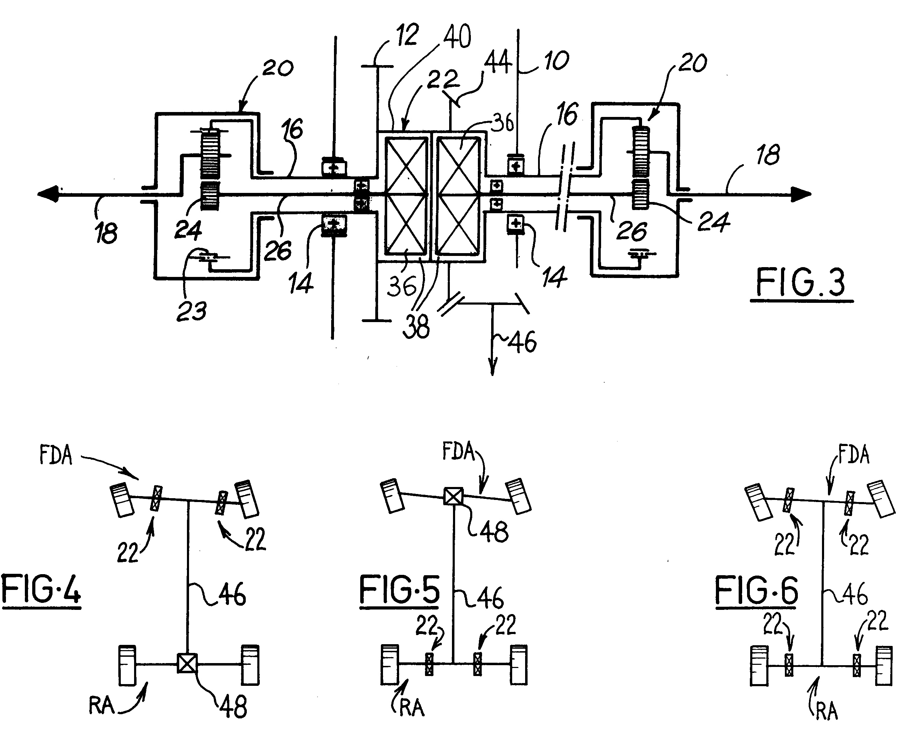

On décrira maintenant un agencement pour l'entrainement en rotation de deux roues d'un même essieu moteur dont un mode de réalisation est illustré à la figure 3.

On a représenté à la figure 3 de manière schématique une portion 10 d'un carter du groupe motopropulseur du véhicule.

Une couronne dentée 12, qui reçoit le mouvement de sortie de la boîte de vitesses est montée à rotation par des paliers 14 dans le carter 10.

La couronne dentée 12 entraîne directement deux arbres tubulaires creux 16.

Chacun des arbres 16 a pour fonction d'entraîner en rotation une des deux roues (non représentées) d'un même essieu du véhicule.

On décrira maintenant l'agencement en se référant à la partie gauche de la figure 3, la partie droite étant d'une conception symétrique pour l'entraînement de l'autre roue.

La liaison entre l'arbre 16 et l'arbre de transmission 18 qui est lui-même relié à une roue du véhicule, est assurée au moyen d'un train épicycloïdal 20 et d'un dispositif à glissement variable 22.

L'arbre tubulaire creux 16 se prolonge axialement pour constituer la couronne extérieure 23 du train épicycloïdal 20.

Le planétaire 24 du train épicycloïdal est relié à un arbre d'entraînement 26 coaxial à l'arbre 16. L'arbre 26 est lui-même relié à la sortie du dispositif à glissement variable 22.

L'organe à glissement variable 22 est ici un organe passif du type pompe hydraulique à palettes comportant un rotor à palettes 36 qui tourne dans une chambre 38 formée dans un carter 40 qui est lié en rotation à la couronne 12.

Le carter 40 est ici commun aux deux dispositifs 22.

Le dispositif à glissement limité 22 permet donc un glissement relatif en rotation de l'arbre 26 par rapport à la couronne 12, c'est-à-dire un glissement relatif en rotation entre le planétaire et la couronne extérieure du train épicycloïdal.

Des moyens électroniques, non représentés, de pilotage de chacun des deux dispositifs à glissement variable 22 ont pour fonction de réguler les vitesses de rotation des deux arbres de transmission 18, notamment pour les maintenir dans la plage déterminée de variation relative de ces vitesses de rotation, et de pouvoir également faire varier globalement la vitesse moyenne des roues de l'essieu.

Le pilotage des deux dispositifs 22 peut être assuré par un dispositif du type limiteur de débit de la pompe, commandé par une unité électronique de régulation et de pilotage.

Le fonctionnement de l'agencement est le suivant. Lorsque le véhicule avance en ligne droite, et quelle que soit sa vitesse d'avancement, les deux roues d'un même essieu tournent sensiblement à la même vitesse.

La répartition du couple entre les deux roues s'effectue automatiquement par l'intermédiaire des dispositifs pilotés à glissement variable 22. Lorsque le véhicule évolue en courbe, les vitesses de rotation des deux roues sont adaptées instantanément en fonction de la valeur du braquage imposé au véhicule, c'est-à-dire en fonction du rayon de courbure, sans qu'aucun couple parasite ne soit transmis à la direction du véhicule. Cette adaptation s'effectue dans les limites imposées par le dispositif de pilotage de chacun des dispositifs à glissement variable 22.

En cas de perte d'adhérence de l'une des deux roues, que ce phénomène se produise en ligne droite ou en courbe, cette roue ne peut patiner que dans la proportion correspondant à la limite permise par le dispositif de pilotage des dispositifs à glissement variable 22.

De plus, lors de la phase temporaire de patinage, le couple continue à être transmis à l'autre roue.

Dans le mode de réalisation illustré à la figure 3, les dispositifs 22 sont des dispositifs passifs, c'est-à-dire des dispositifs ne nécessitant aucune introduction de puissance autre que la puissance d'entraînement du véhicule. Un tel dispositif à glissement variable passif est par exemple constitué par une pompe hydraulique, un compresseur, un dispositif "viscodrive", un coupleur hydraulique à disques multiples, etc.

Il est également possible de prévoir des dispositifs à glissement variable du type actif, c'est-à-dire dans lesquels on introduit une puissance supplémentaire. Un dispositif actif est dans ce cas constitué par un moteur hydraulique ou électrique.

Dans le cas d'un véhicule à quatre roues motrices, l'utilisation d'au moins un tel agencement pour la transmission aux deux roues motrices de l'un des deux essieux moteurs du véhicule permet également d'assurer une fonction de répartition du couple entre les deux essieux.

A cet effet, l'invention propose un système de transmission pour véhicule à quatre roues motrices, par exemple du type de celui illustré schématiquement à la figure 4.

Dans ce système, l'essieu avant directeur et moteur FDA est équipé d'un agencement du type de celui qui vient d'être décrit.

Le carter 40 comporte par exemple une couronne 44 qui permet de transmettre directement le couple moteur à l'essieu arrière moteur RA. Cet essieu arrière RA est de conception connue, c'est-à-dire qu'il comporte un différentiel mécanique 48 pour la répartition du couple moteur entre les deux roues de l'essieu arrière.

L'invention repose sur la constatation selon laquelle, dans un véhicule à quatre roues motrices d'architecture classique à trois différentiels, la prépondérance de répartition du couple donnée sur un essieu, par exemple l'essieu avant, correspond à une vitesse moyenne de rotation des roues de cet essieu supérieure à celle de l'autre essieu, par exemple de l'essieu arrière.

Si, comme dans le cas de la figure 4, on remplace le différentiel mécanique de l'essieu avant par un agencement selon la figure 3, on constate qu'il est alors possible de faire varier globalement la vitesse moyenne de rotation des roues de l'essieu avant, indépendamment du problème de la régulation du glissement de traction par contrôle des vitesses relatives des deux roues de cet essieu, afin de faire varier la vitesse de rotation de cet essieu par rapport à celle de l'essieu arrière dans une plage qui va d'une prépondérance à la traction à une prépondérance à la propulsion.

Ceci nécessite par exemple que les organes mécaniques de transmission agencés entre les deux essieux imposent, en l'absence de tout glissement des dispositifs à glissement variable, une vitesse moyenne de rotation de l'essieu avant supérieure à celle de l'essieu arrière afin de pouvoir partir de ce rapport "d'origine" pour descendre progressivement vers la prépondérance propulsion en laissant globalement glisser l'essieu avant.

Le pilotage de ce glissement global de l'essieu avant nécessite de disposer de paramètres permettant de connaître la vitesse de référence du véhicule et les vitesses de rotation des roues avant ainsi qu'un paramètre représentatif de la vitesse de rotation des roues arrière tel que la vitesse de rotation de l'arbre d'entrée de couple du train arrière ou, dans une version plus perfectionnée, des vitesses de rotation de chacune des roues arrière afin d'en déduire ce paramètre.

La figure 5 illustre une implantation symétrique de celle de la figure 4, dans laquelle c'est l'essieu arrière qui est équipé d'un agencement à glissement variable.

Dans ces deux cas (figures 4 et 5), lorsqu'une des deux roues de l'essieu comportant un différentiel 48 perd son adhérence, cet essieu perd totalement son pouvoir de traction, sauf bien entendu si ce différentiel est par exemple du type à glissement limité.

L'agencement de la figure 6 qui prévoit d'équiper chacun des deux essieux d'un agencement à glissement variable permet de remédier à cet inconvénient car, en cas de perte d'adhérence sur l'une quelconque des quatre roues, l'autre roue du même essieu conserve son pouvoir de traction et le couple de traction est globalement partagé automatiquement et réparti sur les trois roues qui ont conservé un pouvoir de traction.

Les lois de pilotage des différents dispositifs à glissement variable peuvent être adaptées en fonction de la demande des constructeurs de véhicules automobiles en privilégiant selon le cas une prépondérance à la traction avant ou à la propulsion.

**Revendications**

1. Système de transmission pour véhicule automobile routier à quatre roues motrices, caractérisé en ce qu'il comporte un agencement pour l'entraînement en rotation de deux arbres de transmission (18) reliés chacun à une des roues d'un essieu, dans lequel chacun des deux arbres de transmission (18) est relié au groupe motopropulseur (10) du véhicule par l'intermédiaire d'un dispositif (22) permettant un glissement en rotation variable entre son organe d'entrée (12) et son organe de sortie (26), et des moyens de pilotage de chacun des deux dispositifs (22) à glissement variable qui régulent les vitesses de rotation des deux arbres de transmission (18) pour assurer une fonction de répartition du couple entre les deux essieux.

2. Système de transmission selon la revendication 1, caractérisé en ce que, en l'absence de tout glissement en rotation desdits dispositifs (22), les roues dudit essieu tournent à une vitesse moyenne supérieure à la vitesse moyenne de rotation des roues de l'autre essieu moteur du véhicule.

3. Système de transmission selon l'une des revendications 1 ou 2, caractérisé en ce que les dispositifs à glissement variable (22) sont pilotés de manière à faire varier globalement la vitesse moyenne de rotation des roues dudit essieu par rapport à la vitesse moyenne de rotation des roues de l'autre essieu moteur du véhicule.

4. Système de transmission selon l'une quelconque des revendications 1 à 3, caractérisé en ce que ledit essieu est l'essieu avant directeur (FDA) du véhicule.

5. Système de transmission selon l'une quelconque des revendications 1 à 3, caractérisé en ce que ledit essieu est l'essieu arrière moteur (RA) du véhicule.

6. Système de transmission selon la revendication 1, caractérisé en ce que chacun des deux essieux moteurs (FDA, RA) est équipé d'un agencement pour l'entraînement en rotation de ses deux roues, par l'intermédiaire de deux dispositifs à glissement variable (22), lesdits dispositifs à glissement variable étant pilotés de manière à faire varier globalement la vitesse moyenne de rotation des roues d'un essieu moteur (FDA, RA) par rapport à la vitesse moyenne de rotation des roues de l'autre essieu moteur (RA, FDA).

7. Système de transmission selon l'une quelconque des revendications précédentes, caractérisé en ce que chacun des dispositifs à glissement variable (22) est un système passif.

8. Système de transmission selon l'une quelconque des revendications 1 à 6, caractérisé en ce que chacun des dispositifs à glissement variable (22) est un système actif.

9. Système de transmission selon l'une quelconque des revendications précédentes, caractérisé en ce que la plage de variation des vitesses relatives entre les deux arbres de transmission d'un même essieu est comprise entre 0 et 10 % de la vitesse maximale de rotation de ces deux arbres de transmission (18).

FIG.1

FIG. 2

6

FIG.3

FIG.4

FIG.5

FIG.6

EP 0 508 855 A2